# EUROPÄISCHE PATENTANMELDUNG

(11) **EP 1 077 173 A2**
(43) Veröffentlichungstag der Anmeldung: **21.02.2001**
(21) Anmeldenummer: 00116330.2
(22) Anmeldetag: 27.07.2000
(51) Int. Cl.: B62H 5/00

(54) **Zweiradschloss**

(30) Priorität: 16.08.1999 DE 19938741
(71) Anmelder: ABUS August Bremicker Söhne KG, 58300 Wetter-Volmarstein (DE)
(72) Erfinder:
(74) Vertreter: Manitz, Finsterwald & Partner

(57) **Zusammenfassung**

Die Erfindung betrifft ein Zweiradschloß mit einem Schloßkörper 1, einem darin verriegelbaren Schließkloben 2, sowie einem sich zwischen Schloßkörper 1 und Schließkloben erstreckenden, spiralförmig nach Art einer schraubenförmigen Zugfeder gewundenen Kabel 3, wobei die Spiralwindungen 4, 5 des Kabels 3 in einer Transportstellung entsprechend einer entlasteten Zugfeder im wesentlichen nebeneinander zu liegen kommen, während sie in einer Funktionsstellung entsprechend einer zugbelasteten Zugfeder auseinander gezogen sind, wobei das Kabel 3 genau zwei Spiralwindungen 4, 5 besitzt.

## Beschreibung

Die Erfindung betrifft ein Zweiradschloß mit einem Schloßkörper, einem darin verriegelbaren Schließkloben, sowie einem sich zwischen Schloßkörper und Schließkloben erstreckenden, spiralförmig nach Art einer schraubenförmigen Zugfeder gewundenen Kabel, wobei die Spiralwindungen des Kabels in einer Transportstellung entsprechend einer entlasteten Zugfeder im wesentlichen nebeneinander zu liegen kommen, während sie in einer Funktionsstellung entsprechend einer zugbelasteten Zugfeder auseinander gezogen sind.

Derartige Zweiradschlösser sind aus dem Stand der Technik bekannt und besitzen gegenüber den ebenfalls bekannten Ring- und Bügelschlössern den Vorteil, daß Sie aufgrund der in der Transportstellung im wesentlichen nebeneinander zu liegen kommenden Spiralwindungen deutlich geringere Abmessungen aufweisen als in der Funktionsstellung, in der das Schloß zum Sichern des Zweirads dient und in der die Spiralwindungen auseinandergezogen sind. Somit ermöglicht ein Zweiradschloß der eingangs genannten Art, welches auch als "Spiralschloß" bezeichnet wird, einen komfortableren Transport als beispielsweise Ring- und Bügelschlösser.

Nachteilig an Spiralschlössern ist die Tatsache, daß sie beim Abschließen eines Zweirads, also bei Überführung des Schlosses von der Transport- in die Funktionsstellung, vergleichsweise umständlich gehandhabt werden müssen, da sich die einzelnen Spiralwindungen des Schlosses beim Auseinanderziehen oftmals an Teilen des Zweirads oder beispielsweise auch an einem Pfosten, an dem das Zweirad gesichert werden soll, verhaken, so daß das Kabel des Spiralschlosses umständlich mit seinen einzelnen Windungen um oder durch die aneinander zu befestigenden Bereiche "gefädelt" werden muß. Zudem ist von Nachteil, daß beim Auseinanderziehen des Spiralschlosses vom Benutzer eine gewisse Kraft aufgewendet werden muß. Eine entsprechende Kraft wirkt dann auf nachteilige Weise auf ein beispielsweise an einem Pfosten gesichertes Zweirad, was insbesondere bei stark auseinandergezogenem Spiralschloß zu einem Kippen des Zweirads führen kann.

Eine Aufgabe der Erfindung besteht darin, ein Zweiradschloß der eingangs genannten Art derart weiterzubilden, daß sich das Abschließen des Zweirads komfortabler gestaltet.

Erfindungsgemäß wird diese Aufgabe dadurch gelöst, daß das Kabel einschließlich der für die Schließfunktion nutzbaren Länge von Schloßkörper und Schließkloben in seiner Transportstellung genau zwei Spiralwindungen bildet.

Durch diese einfache Maßnahme wird auf überraschende Weise erreicht, daß sich ein Spiralschloß beim Abschließen ähnlich komfortabel handhaben läßt wie ein Ringschloß, da ein lediglich zwei Spiralwindungen aufweisendes Spiralschloß im auseinandergezogenen Zustand - bis auf eine einzige Einbuchtung - im wesentlichen die Form eines Ringschlosses aufweist, so daß beim Bewegen des geöffneten Schlosses durch bzw. um die abzuschließenden Teile kein Verhaken stattfinden kann.

Wenn der Benutzer das erfindungsgemäße Schloß nach dem Öffnen und vor dem Abschließvorgang an einem Ende um 360° um die Kabelachse dreht und das andere Ende dabei festhält, läßt sich sogar erreichen, daß die vorstehend genannte Einbuchtung verschwindet und das Spiralschloß tatsächlich die Form eines Ringschlosses aufweist, welches dann vollkommen unproblematisch, insbesondere ohne großen Kraftaufwand um bzw. durch die abzuschließenden Teile bewegt werden kann.

Besonders bevorzugt ist es, wenn das Kabel des erfindungsgemäßen Schlosses bei der Herstellung derart gewickelt wird, daß es im entspannten Zustand aufgrund eines Rückstelleffekts eine Spiralform und somit die Transportstellung einnimmt. In diesem Fall ist es also nicht nötig, daß der Benutzer das Schloß aktiv in seine Transportstellung bewegt, da die entsprechende Bewegung automatisch vor sich geht. Dies trifft insbesondere auch dann zu, wenn das Schloß vor dem Bewegen in seine Funktions- bzw. Schließstellung in der vorstehend beschriebenen Weise um 360° gedreht wird, was bedeutet, daß diese Drehung vom Benutzer beim Überführen des Schlosses in die Transportstellung ebenfalls nicht aktiv rückgängig gemacht werden muß.

Die Nutzlänge des Schlosses, d. h. die Kabellänge zuzüglich der für die Schließfunktion nutzbaren Länge von Schloßkörper und Schließkloben, liegt bevorzugt zwischen 50 cm und 120 cm, insbesondere zwischen 70 cm und 90 cm.

Das Kabel des erfindungsgemäßen Schlosses kann entweder als reines Metallkabel oder als Metallkabel mit Kunststoffummantelung ausgeführt sein. Die Dicke des Kabels einschließlich einer gegebenenfalls vorhandenen Kunststoffummantelung beträgt bevorzugt zwischen 7 m und 20 mm, insbesondere zwischen 12 mm und 18 mm.

Die Schließfunktion zwischen Schloßkörper und Schließkloben kann auf beliebige Art, insbesondere mittels eines Schließzylinders, eines Codeschlosses oder eines elektromechanischen Schließmechanismus bewerkstelligt werden.

Weitere bevorzugte Ausführungsformen der Erfindung sind in den Unteransprüchen angegeben.

Die Erfindung wird nachfolgend anhand eines Ausführungsbeispiels unter Bezugnahme auf die Figuren beschrieben; in diesen zeigen:
- Fig. 1: eine schematische Ansicht eines erfindungsgemäßen Schlosses in seiner Transportstellung,
- Fig. 2: eine schematische Ansicht des Schlosses gemäß Fig. 1 in seiner Funktionsstellung, und
- Fig. 3: eine schematische Ansicht des Schlosses gemäß Fig. 1 in einer alternativen Funktionsstellung.

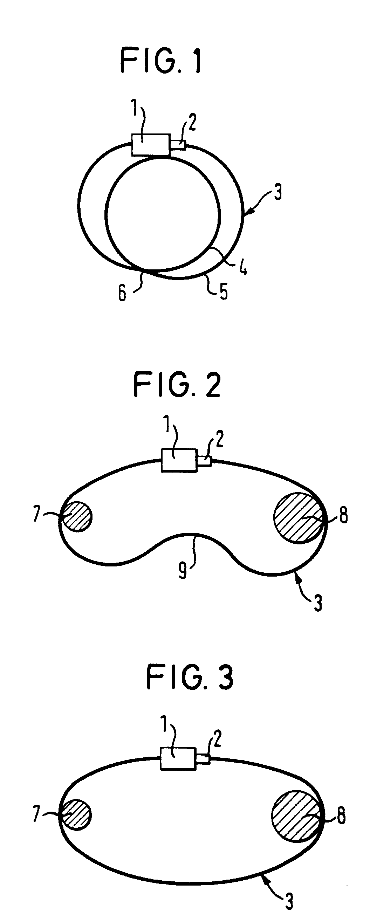

Fig. 1 zeigt ein erfindungsgemäßes Zweiradschloß mit einem Schloßkörper 1 und einem darin verriegelten Schließkloben 2, wobei sich zwischen Schloßkörper 1 und Schließkloben 2 ein Kabel 3 erstreckt, welches mit seinen beiden stirnseitigen Enden am Schloßkörper 1 bzw. am Schließkloben 2 befestigt ist.

Das Kabel 3 besitzt zwei Spiralwindungen 4, 5, wobei diese Spiralwindungen 4, 5 in der in Fig. 1 gezeigten Transportstellung nebeneinander legen und sich insbesondere in zumindest einem Punkt 6 gegenseitig berühren.

In dieser in Fig. 1 gezeigten Transportstellung besitzt das Schloß vergleichsweise geringe Abmessungen, so daß es problemlos transportiert werden kann. Zum Zweck des Transports kann beispielsweise der Schloßkörper 1 mit einem - nicht dargestellten - Halterungsabschnitt versehen sein, mittels welchem das Schloß an einem Zweirad festlegbar ist.

Fig. 2 zeigt das Schloß gemäß Fig. 1 in seiner Funktionsstellung, d. h. in einer Stellung, in der es zum Abschließen eines Zweirads verwendet wird:

Es ist erkennbar, daß die in Fig. 2 gezeigten Spiralwindungen 4, 5 des Kabels 3 auseinandergezogen sind, so daß das Kabel insgesamt im wesentlichen eine Ringform aufweist. Das in Fig. 2 ringförmig dargestellte Kabel 3 ist sowohl um ein im Schnitt dargestelltes Rahmenrohr 7 eines Zweirads sowie um einen ebenfalls im Schnitt dargestellte Pfosten 8, beispielsweise eines Verkehrsschilds, gelegt, so daß das Zweirad am Verkehrsschild gesichert ist.

Aus Fig. 2 ist zu erkennen, daß das ringförmige Kabel in seiner Funktionsstellung lediglich eine einzige Einbuchtung 9 aufweist, die dadurch bedingt ist, daß das Kabel 3 bei seiner Herstellung derart gewickelt wurde, daß es im entspannten Zustand automatisch eine Spiralform einnimmt. Diese Einbuchtung 9 stört jedoch beim Abschließen eines Zweirads nicht.

Fig. 3 zeigt das Schloß gemäß den Fig. 1 und 2 in einer alternativen Funktionsstellung, wobei hier vor dem Abschließen des Zweirads ein Ende des Kabels 3 um 360° gegenüber dem anderen Ende des Kabels 3 verdreht wurde. Auf diese Weise wird erreicht, daß die in Fig. 2 zu sehende Einbuchtung 9 verschwindet und das Kabel 3 eine glatte Ringform aufweist, so daß ein sich noch komfortableres Abschließen eines Zweirads ergibt.

### Bezugszeichenliste

- 1: Schloßkörper
- 2: Schließkloben
- 3: Kabel
- 4: Spiralwindung
- 5: Spiralwindung
- 6: Berührungspunkt
- 7: Rahmenrohr
- 8: Pfosten
- 9: Einbuchtung

## Patentansprüche

1. Zweiradschloß mit einem Schloßkörper 1, einem darin verriegelbaren Schließkloben 2, sowie einem sich zwischen Schloßkörper 1 und Schließkloben erstreckenden, spiralförmig nach Art einer schraubenförmigen Zugfeder gewundenen Kabel 3, wobei die Spiralwindungen 4, 5 des Kabels 3 in einer Transportstellung entsprechend einer entlasteten Zugfeder im wesentlichen nebeneinander zu liegen kommen, während sie in einer Funktionsstellung entsprechend einer zugbelasteten Zugfeder auseinander gezogen sind,
**dadurch gekennzeichnet,**
daß das Kabel 3 einschließlich der für die Schließfunktion nutzbaren Länge von Schloßkörper 1 und Schließkloben 2 in seiner Transportstellung genau zwei Spiralwindungen 4, 5 bildet.

2. Zweiradschloß nach Anspruch 1,
**dadurch gekennzeichet,**
daß das Kabel 3 bei der Herstellung derart gewickelt ist, daß es im entspannten Zustand aufgrund eines Rückstelleffekts automatisch eine Spiralform und somit seine Transportstellung einnimmt.

3. Zweiradschloß nach einem der vorherigen Ansprüche,
**dadurch gekennzeichnet,**
daß die Nutzlänge des Schlosses, d.h. die Kabellänge zuzüglich der für die Schließfunktion nutzbaren Länge von Schloßkörper 1 und Schließkloben 2, zwischen 50 cm und 120 cm, insbesondere zwischen 70 cm und 90 cm liegt.

4. Zweiradschloß nach einem der vorherigen Ansprüche,
**dadurch gekennzeichnet,**
daß die Dicke des Kabels 3 einschl. einer insbesondere vorhandenen Kunststoffummantelung zwischen 7 mm und 20 mm, insbesondere zwischen 12 mm und 18 mm liegt.

5. Zweiradschloß nach einem der vorherigen Ansprüche,
**dadurch gekennzeichnet,**
daß die Schließfunktion zwischen Schloßkörper 1 und Schließkloben 2 mittels eines Schließzylinders, eines Codeschlosses, oder eines elektromechanischen Schließmechanismus bewerkstelligbar ist.
